(19) **Europäisches Patentamt / European Patent Office / Office européen des brevets**

(11) **EP 2 994 903 B1**

(12) # EUROPEAN PATENT SPECIFICATION

(45) Date of publication and mention of the grant of the patent:
**03.04.2019 Bulletin 2019/14**

(21) Application number: **14707949.5**

(22) Date of filing: **05.02.2014**

(51) Int Cl.:
*G08G 1/01* (2006.01)    *G06N 3/12* (2006.01)

(86) International application number:
**PCT/EP2014/052216**

(87) International publication number:
**WO 2015/049064 (09.04.2015 Gazette 2015/14)**

(54) **METHOD AND COMPUTER PROGRAM PRODUCT FOR ACCURATE MOTORWAY SPEED CONTROL**

VERFAHREN UND COMPUTERPROGRAMMPRODUKT ZUR GENAUEN GESCHWINDIGKEITSREGELUNG AUF DER AUTOBAHN

PROCÉDÉ ET PRODUIT DE PROGRAMME INFORMATIQUE POUR LA RÉGULATION PRÉCISE DE LA VITESSE SUR L'AUTOROUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2013 EP 13186833**

(43) Date of publication of application:
**16.03.2016 Bulletin 2016/11**

(73) Proprietor: **NEC Corporation**
**Minato-ku**
**Tokyo 108-8001 (JP)**

(72) Inventors:
• **GKIOTSALITIS, Konstantinos**
  **60488 Frankfurt (DE)**
• **ALESIANI, Francesco**
  **69121 Heidelberg (DE)**

(74) Representative: **Patent- und Rechtsanwälte**
**Ullrich & Naumann**
**PartG mbB**
**Schneidmühlstrasse 21**
**69115 Heidelberg (DE)**

(56) References cited:

• **FREJO J R D ET AL: "Feasible Cooperation based Model Predictive Control for freeway traffic systems", DECISION AND CONTROL AND EUROPEAN CONTROL CONFERENCE (CDC-ECC), 2011 50TH IEEE CONFERENCE ON, IEEE, 12 December 2011 (2011-12-12), pages 5965-5970, XP032122766, DOI: 10.1109/CDC.2011.6160920 ISBN: 978-1-61284-800-6**
• **FREJO JOSE RAMON D ET AL: "Model predictive control for freeway traffic using discrete speed limit signals", 2013 EUROPEAN CONTROL CONFERENCE (ECC), EUCA, 17 July 2013 (2013-07-17), pages 4033-4038, XP032526474, [retrieved on 2013-11-17]**
• **JOSÉ RAMÓN DOMÍNGUEZ FREJO ET AL: "Global Versus Local MPC Algorithms in Freeway Traffic Control With Ramp Metering and Variable Speed Limits", IEEE TRANSACTIONS ON INTELLIGENT TRANSPORTATION SYSTEMS, IEEE, PISCATAWAY, NJ, USA, vol. 13, no. 4, 1 December 2012 (2012-12-01), pages 1556-1565, XP011474076, ISSN: 1524-9050, DOI: 10.1109/TITS.2012.2195493**
• **RODRIGO C CARLSON ET AL: "Mainstream Traffic Flow Control of merging motorways using Variable Speed Limits", CONTROL&AUTOMATION (MED), 2011 19TH MEDITERRANEAN CONFERENCE ON, IEEE, 20 June 2011 (2011-06-20), pages 674-681, XP031927973, DOI: 10.1109/MED.2011.5983115 ISBN: 978-1-4577-0124-5**

## Description

The present invention relates to a method for motorway speed control as well as to a computer program product which contains program code to execute such method.

Traffic congestion on motorways, where motorways include highways, freeways, expressways, metropolitan highways, or the like, and the formation of shockwaves yield, in many cases, total traffic breakdown with severe effects. Among these effects, the most significant and considerable ones are additional expenses to the motorway authorities and the drivers, an increase of the Total Time Spent and delays of drivers using the infrastructure, over pollution, and safety hazards.

Until now, several attempts have been made to model the traffic dynamics on motorways and coordinate the use of Ramp Meters (RM) and Variable Speed Limits (VSL) for the optimization of traffic flow. Most of the developed models are macroscopic (see, for instance Hegyi, A., De Schutter, B., Hellendoorn, H.: "Model predictive control for optimal coordination of ramp metering and variable speed limits", in: Transportation Research Part C, vol. 13, Issue 3, pp. 185-209, 2005, or Kotsialos, A., Papageorgiou, M.: "Coordinated and integrated control of motorway networks via non-linear optimal control", in: Transportation Research Part C, vol. 10, Issue 1, pp. 65-84, 2002, or Frejo, J.R.D., Camacho, E.F.: "Feasible cooperation based model predictive control for freeway traffic systems", in 2011 50th IEEE CDC-ECC), and try to set the values of VSL to prevent the formation of shockwaves and increase the total throughput.

Nevertheless, macroscopic traffic modeling is prone to errors due to precision loss while describing the traffic characteristics in such a way that the driver behavior is not modeled in the individual level, but instead aggregated traffic characteristics such as average speeds and occupancy levels are considered. In addition to their inaccuracy, macroscopic models cannot capture the VSL effects on other indicators such as the fuel consumption and pollutant emissions and cannot describe adequately the setting of different speed limits in each motorway lane. For instance, in many occasions one VSL set might reduce slightly the overall throughput compared to the selected VSL set but succeed a high reduction on fuel consumption and pollutant emissions which cannot be captured with macroscopic models.

On the contrary, microscopic simulation which considers the effects of VSL Control on fuel consumption/pollutant emissions, models the effect of various speeds on each lane and returns results with higher accuracy is computationally expensive and might fail to return a solution within the VSL Control target computation time. In addition, a brute force approach consisting of comparing all possible VSL combinations with micro-simulation is not feasible for performing Dynamic VSL Control. For instance, for setting three VSL on a 3-lane motorway stretch where, for practical reasons, six speed values are permitted, $6^{3\times3}$ = 10,077,696 combinations should be examined). Provided that VMS (Variable Message Signs) can be spaced 1 km apart, the VMS control on a 2-lane, 50km highway requires the comparison of $6^{50*2} \approx 6.53*10^{17}$ scenarios.

In view of the above it is an objective of the present invention to improve and further develop a method and a computer program product for motorway speed control in such a way that they allow obtaining a solution to the VSL with high level of accuracy and limited computational requirements.

In accordance with the invention, the aforementioned object is accomplished by a method comprising the features of claim 1. According to this claim such a method comprises the steps of

splitting the motorway into a number of stretches, wherein each stretch includes one or more variable speed limit (VSL) sites that are configured to indicate VSL control settings in form of discrete speed values,
defining an initial solution space of each stretch including all possible combinations of VSL control settings, and shrinking the initial solution space of each stretch by applying constraint-based and/or macroscopic traffic analysis-based reduction schemes, and
based on the resulting residual solution space, evaluating a combination of VSL control settings as a solution combination for being indicated by said VSL sites of the respective stretch by performing an iterative solution search in which macro-simulations together with a limited number of micro-simulations are applied on selected candidate subsets of combinations of VSL control settings.

Furthermore, the above mentioned objective is accomplished by a computer program product in accordance with claim 15 According to the present invention it has first been recognized that an accurate VSL control solution can be evaluated with limited computational cost by integrating macro-simulations, constrained-based rules and micro-simulations. In this context, "accurate" speed control solution means a set of speed limits that, taking into account the typical drivers' behavior, provides an effect in terms of certain parameters, in particular travel time and in specific embodiments also fuel consumption and/or pollutant emissions, that is close to the ideal solution. According to the invention the motorway is split into sections or stretches and, based thereupon, an initial solution space is determined, on which various computational inexpensive techniques are applied in order to significantly reduce the solution space according to the target computation time. Further, based on a shrunk residual solution space, the present invention proposes to opportunistically use macroscopic and/or microscopic simulations to evaluate solution candidates and maintaining the computation time within the imposed limits. To summarize, in accordance with the invention it has been recognized that dynamic solution space shrinking and an iterative simulation process that considers the target computation time based on an opportunistic integration of macro- and micro-simulations is the key to providing more accurate results.

Generally, the method according to the present invention trades computational time and accuracy for VSL systems and provides adjustable accuracy/complexity as a function of target computation time. As a result, the present invention yields better accuracy than current systems which are based on macroscopic analysis and, at the same time, better scalability than pure microscopic methods.

According to a preferred embodiment the stretches are generated in the form of non-overlapping adjoining motorway segments. The motorway split into stretches may be performed each time the VSL control settings of the VSL sites are intended to be updated.

According to a preferred embodiment a targeted computation time is determined based on the times at which VSL updates are to be performed, which may be, e.g., every 10 minutes. In addition, it may be provided that the time required for executing micro-simulations of different stretches is estimated based on the current traffic conditions (i.e., by estimating the number of vehicles simulated with micro-simulation). By considering the target computation time as a given constraint, the number of micro-simulations which are feasible within that time is estimated.

According to a preferred embodiment the lengths of the stretches may be dynamically adjusted taking into consideration at least one of the parameters current traffic in the motorway, target computation time, required micro-simulation time and desired level of accuracy. For instance, splitting the motorway into lengthier stretches including more VSL sites increases the complexity of the VSL control since more VSL combinations are available. Nevertheless, due to the constrained number of micro-simulations, a limited number of VSL combinations will be examined and the solution accuracy will reduce. On the other hand, splitting the motorway into shorter stretches which include fewer VSL sites - and combinations of VSL control settings, respectively (hereinafter briefly denoted VSL combinations) - will allow the examination of a higher portion of VSL combinations yielding a more accurate solution. After deciding the level of accuracy, the motorway is split into stretches containing a number of VSL sites and the solution space of each stretch can be defined based on the number of VSL combinations.

In this regard it is worth noting that the idea of length-varying stretches over time is contradictory to the traditional motorway splitting techniques for traffic modeling at which motor-ways are divided into static stretches with pre-determined boundaries, such as the location of intersections, merging lane points, off-ramps and on-ramps or space boundaries in order to restrict vehicles from traversing more than one stretch during the simulation time step. Consequently, the proposed motorway splitting method adapts better to the current traffic, and the trade-off between the stretch-level solution accuracy and the motorway-level solution accuracy is optimized.

According to a preferred embodiment, after defining the solution space of a motorway stretch, a set of constraint-based reduction methods is applied to shrink the initial solution space. The constraint-based reduction methods include methods with low computational requirements which exclude VSL combinations through safety, practicality checks and/or feasibility checks. These methods can include checks, in particular compatibility and/or self-consistency checks, of VSL combinations against the VSL values of the previous time step, the VSL values of neighboring VSL sites, their expected performance compared to the performance of the uncontrolled scenario and more.

Alternatively or additionally, the solution space may be further shrunk by applying a set of methods based on macroscopic traffic analysis. Given the current macroscopic traffic characteristics including the expected ramp and mainline flows a set of VSL combinations for a motorway stretch may be excluded by performing macroscopic analysis on the stretch and its neighboring stretches. In particular, it may be provided that macroscopic data analysis is carried out on the examined stretch, e.g., by defining the relationship between the average speed and the traffic density from historical data and by rejecting VSL combinations that propose higher speeds than the expected ones according to the current traffic conditions. Moreover, the macroscopic traffic analysis-based reduction schemes may include a scheme that, by way of performing boundary condition analysis, ensures that a VSL scenario applied in one stretch is not deteriorating the traffic conditions on other stretches and hence the entire motorway by transferring traffic to other stretches beyond their traffic capacity(i.e., via comparison of the overall transferred traffic to other stretches through the VSL scenario and the uncontrolled scenario after applying a macro-simulation model).

According to a preferred embodiment an acceptable solution space may be defined that includes all combinations of VSL control settings within the residual solution space (that is obtained after having applied the constraint-based and macroscopic traffic analysis-based reduction schemes as described above) having a better performance than the uncontrolled scenario. This acceptable solution may be determined by solving an objective function that specifies the intended performance criteria. According to a particularly preferred embodiment the performance criteria may not only take into consideration delay, but in addition fuel consumption and/or pollutant emission. For instance, for calculating pollutant emissions with micro-simulations the scheme described in Panis, I.L., Broekx, S., Liu, R.: "Modelling instantaneous traffic emissions and the influence of traffic speed limits", in Science of the total Environment, vol. 371, issues: 1-3, pp. 270-285, (2006) may be employed. However, as will be easily appreciated by those skilled in the art, alternative methods may be employed likewise.

According to a preferred embodiment the iterative solution search includes the step of selecting from the residual solution space an initial candidate subset of combinations of VSL control settings, and applying a first round of micro-simulations on the initial candidate subset. More specifically, a set of methods may be applied on the residual solution space after performing a constraint-based and/or macro-level traffic analysis for the selection of a candidate subset for an initial set of micro-simulations. Initially, a candidate subset which is expected to have a good performance is selected, and the micro-simulation feedback is used for selecting next/subsequent candidate subsets in order to reach the final solution after executing as few micro-simulations as possible. The size of the initial candidate subset may be limited depending on the target computation time, the estimated time for executing a micro-simulation, and the size of the initial solution space.

According to a preferred embodiment, instead of implementing micro-simulation for each VSL combination within the candidate subsets, a mixed macro/micro-simulation scheme may be adopted in order to reduce the number of the computationally expensive micro-simulations. For each VSL scenario within the candidate subset, macro-simulation and other performance approximation techniques may be applied first and the VSL scenario can be rejected without proceeding on micro-simulation if the results are evidently worse than the already computed ones.

Advantageously, the iterative solution search is terminated either when a combination of VSL control settings belonging to an examined candidate subset returns a solution lying within the acceptable solution space or when a predefined maximum number of candidate subsets have been examined.

According to a preferred embodiment candidate subset selection may be performed by way of applying genetic algorithms. Moreover, crossover and/or mutation techniques may be applied in connection with said candidate subset selection.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the drawing on the other hand. In connection with the explanation of the preferred embodiments of the invention by the aid of the drawing, generally preferred embodiments and further developments of the teaching will be explained. In the drawing

Fig. 1 is a high-level workflow diagram schematically illustrating the procedural steps of a motorway speed control in accordance with an embodiment of the present invention,

Fig. 2 is a diagram schematically illustrating the workflow of a dynamic motorway split model applied in connection with an embodiment of the present invention , and

Fig. 3 is a schematic view illustrating a motorway fraction in which motorway speed control in accordance with an embodiment of the present invention is applied.

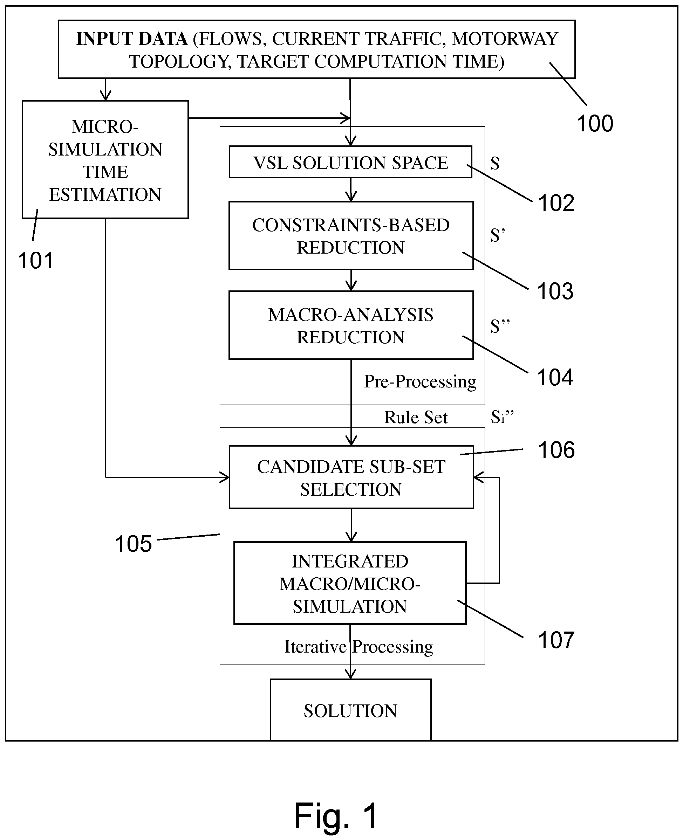

Fig. 1 is a high-level workflow diagram of a motorway speed control in accordance with an embodiment of the present invention. The objective of the illustrated embodiment is to return a solution which reduces the fuel consumption and the pollutant emissions while improving or not deteriorating considerably the overall time delay by selecting appropriate VSL values for each lane of the controlled motorway and performing RM (ramp metering) by VSL which enforce a zero speed, when needed.

The embodiment of the invention illustrated in Fig. 1 is based on a micro-level analysis for VSL control for delay, fuel consumption and pollutant emission reduction which is more accurate than the manual VSL control (which has long latency and is error-prone) or VSL control with macroscopic traffic analysis (which has long latency and inaccuracy).

Since micro-level traffic analysis is computationally expensive, the VSL solution space is first shrunk through constraint-based and macroscopic traffic analysis-based reduction, splitting of the residual solution space and solution selection by performing a limited number of micro-simulations on candidate solution subsets.

The micro-simulation models applied in connection with the embodiment illustrated in Fig. 1 are the ones described in Gipps, P.G.: "A behavioural car-following model for computer simulation", in Transport Research Part B, vol. 15, Issue 2, pp. 105-111, (1981) or Fritzsche, H.: "A model for traffic simulation. In Traffic Eng. Control, vol. 35, no. 5, pp. 317-321, (1994)". In order to calculate pollutant emissions with micro-simulations of the model described in Panis, I.L., Broekx, S., Liu, R.: "Modelling instantaneous traffic emissions and the influence of traffic speed limits", in Science of the total Environment, vol. 371, issues: 1-3, pp. 270-285, (2006) is applied. As will be easily appreciated by those skilled in the art, and there are many other micro-simulation models known in the art which may be applied likewise.

As illustrated in step 100, the motorway speed control of the embodiment illustrated in Fig. 1 considers as input data for VSL control the motorway topology, the current traffic conditions, the expected traffic flows, and the target computation time. The proposed VSL control speeds are assumed to be discrete numbers (i.e., 0-10-20-...-80-...-120km/h). The selected VSL values can be transmitted to the drivers or the vehicles either via visual signs, known as the VMS (Variable Message Sign), or via human-machine interfaces, for example in Japan using the VICS communication system.

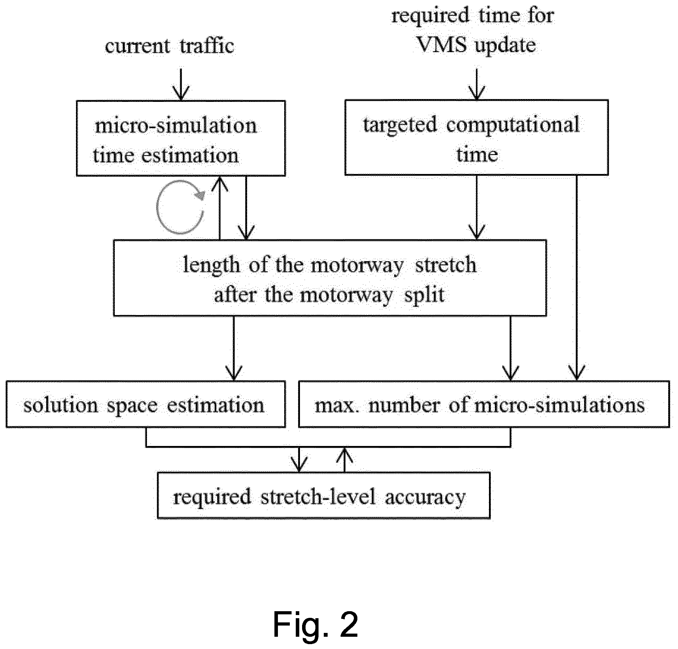

The motorway split model, of which an embodiment is illustrated in more detail in Fig. 2, splits the motorway into stretches given as inputs the current traffic in the motorway, the target computation time and the desired level of accuracy.

First, as indicated at 101, the required time for micro-simulating different motorway lengths given the current traffic (i.e., number and type of vehicles) in the motorway is estimated. Off-line micro-simulations of several motorway stretches with different lengths and traffic conditions can be executed and their time requirements can be used as a basis for estimating the required micro-simulation time for the current traffic scenario.

Given the estimated micro-simulation time - $t_{est}$ - and the target computation time - $t_a$ - the maximum number of micro-simulations within the target computation time is estimated as $n_{mic.} = t_a/t_{est}$. The size of the solution space depends on the correct handling of two contradictions: If the motorway is split in fewer and lengthy stretches it is easier to understand the effect of a stretch-level VSL solution to the overall motorway traffic; but, lengthy stretches contain more VSL sites and given the limited number of micro-simulations the stretch-level solution accuracy is reduced. On the other hand, splitting the network in smaller stretches increases the stretch-level solution accuracy since each stretch contains less VSL sites but it is more difficult to capture the effect of stretch-level VSL solution to the overall motorway traffic. In the motorway splitting model according to the present embodiment, the size of each stretch is a function of the stretch-level solution accuracy, which is approximated by comparing the number of possible micro-simulations and the number of possible VSL combinations in the stretch, and the motorway-level solution accuracy, which is higher for less stretches: Size($S$) $= f(n_{mic.}, n_{VSL\_combinations\_within\_a\_stretch}, n_{stretches})$.

Given the size of the solution space $S$, the number of VSL sites that can be controlled within the target computation time is returned. For instance, if VSL sites can suggest $U$ different speed limits and the number of motorway lanes is $Z$, then for the VSL control of $V$ VSL sites the solution space is: $U^{V*Z}$. If the solution space can handle the combinations of $V$ VSL sites, then the length of the stretch depends on the distance among the VSL sites and the length of stretches can vary from time to time due to changes on the current traffic, the target computation time and the desired level of accuracy.

The idea of length-varying stretches over time is contradictory to traditional motorway splitting techniques for traffic modeling at which motorways are divided into stable stretches with boundary criteria (such as the location of intersections, merging lane points, off-ramps and on-ramps) and lengths that restrict vehicles to traverse more than one stretch during the simulation time step (typical cell lengths are 200 or 500m depending on the simulation time step). Consequently, the proposed motorway splitting method is advantageous compared to the traditional splitting methods since it adapts to the current traffic, and the trade-off between the *stretch-level solution accuracy* and the *motorway-level solution accuracy* is optimized, whereas macro-splitting methods are not capable of adjusting the stretch lengths. For instance, if the current traffic on the motorway is low and isolated areas confront congestion problems, then the motorway is split in more stretches to optimize better the stretch-level traffic on the congested areas, whereas the low traffic on the motorway ensures that the overall traffic will not be significantly affected. Likewise, if the motorway is congested, the motorway is split in less stretches since the traffic coordination on the entire motorway is more important than the traffic optimization on isolated congested areas.

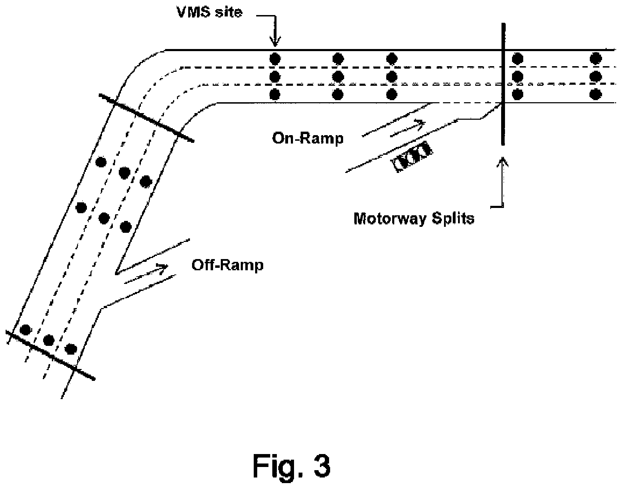

Fig. 3 schematically illustrates a fraction of a motorway on which the above dynamic motorway splitting model has been applied.

After having defined the VSL solution space $S$, as indicated at 102, by splitting the motorway into stretches, the method proceeds with step 103 by applying constraint-based reduction schemes, which are schemes with low computational requirements that aim at excluding VSL combinations through various feasibility checks. Specifically, the following methods may be applied:

**Compatibility with Previous VSL Suggestions**

Let the motorway stretch $i$ contain $Y$ VSL sites with previous speed limit suggestions ($S_1$, $S_2$, ..., $S_Y$). Due to safety reasons and in order facilitate a smooth transition from one speed set to another a number of constraints can be imposed on the new speed limit suggestions ($S_{1'}$, $S_{2'}$, ..., $S_{Y'}$). For instance, the speed suggestion from the same VSL site might not differ more than $X$ km/h to enhance a smooth transition since the probability of drivers' non-compliance with the speed suggestion is higher for speeds with higher variation from their previous value (as has been evaluated in Elliot, M.A., Armitage, C.J.: "Effects of implementation intentions on the self-reported frequency of drivers' compliance with speed limits", in: Journal of Experimental Psycology, vol. 12(2), pp. 108-117, 2006). VSL combinations which include VSL values that violate the smooth transition requirements are excluded from the solution set.

**VSL Self-Consistency**

The speed limit suggestions should ensure that all vehicles are able to comply with the proposed speed limit from a VSL site before reaching the next VSL site. For instance, if the suggested speed in one VSL site, $j$, is $SP_j$ and the vehicle enters the downstream area with speed $SP_0$, then the vehicle should be able to adjust to the proposed speed $SP_j$ by accelerating/decelerating before reaching the next VSL site $j+1$.

**Uncontrolled Scenario Analysis**

In this stage VSL combinations are rejected by comparing their performance against the performance of the uncontrolled scenario with the use of computationally inexpensive methods. For instance, a microscopic simulation of the uncontrolled scenario is executed considering the current traffic conditions and the overall delay, $D_u$, is calculated. Then, the overall delay of a VSL scenario, $\varphi$: {$S_{\varphi 1}$, $S_{\varphi 2}$, ..., $S_{\varphi Y}$}, under free flow conditions is estimated as the aggregated difference between the desired speed for the examined stretch and the mandatory speed of vehicles according to the VSL combination $\varphi$ and if it is bigger than the delay of the uncontrolled scenario, the respective VSL scenario is rejected.

The resulting solution space, after having applied the above constraint-based reduction schemes, is denoted $S'$.

Next, as indicated at 104, macroscopic traffic analysis may be performed to reduce further the solution space. Given the current macroscopic traffic characteristics, including the expected ramp and mainline flows, a set of VSL combinations for a motorway stretch $i$ are excluded by performing macroscopic analysis on stretch $i$ and its neighboring stretches. In particular, the following macroscopic traffic analysis-based solution space reduction schemes may be applied:

**Macroscopic Traffic Analysis on a Stretch**

In this method, past (historical) detections of macroscopic traffic parameters for each downstream area of a VSL site are gathered and a function which approximates the relationship between the average speed and the corresponding traffic density is defined: Av.Speed = f(Density).

One method for excluding VSL combinations is to analyze the current traffic data on the downstream area of each VSL site. Given the current traffic density of the downstream area of a VSL site, an estimated value of the average speed is derived from the corresponding speed-density approximation function, $f$. If the expected average speed on the downstream area is low due to traffic congestion, then VSL suggestions of a higher speed will not be followed since they are practically infeasible.

Another method for excluding VSL combinations is to perform a low cost macro-simulation for different VSL scenarios. The macroscopic model should be at least a second-order model in order to allow the parameterization of speed. The expected mainline, onramp and offramp flows on the downstream area are used as an input together with the current traffic conditions and the evolution of traffic over time is simulated. Given the macro-simulation results, VSL values which exceed the expected average speed values on the downstream areas are rejected because they are not feasible for such traffic conditions.

**Macroscopic Traffic Analysis on Neighboring Stretches**

In the best case scenario, the motorway will be modeled as one stretch in order to capture the effect of a VSL suggestion on the motorway traffic. Nevertheless, due to computational constraints, the motorway might be split into several stretches and the higher the number of stretches, the lower the understanding of the effect of a VSL suggestion on other motorway stretches. Such practice might cause problems on the VSL control approach since the optimal VSL solution for a stretch might improve the delay and fuel consumption on that stretch while deteriorating the traffic conditions on the neighboring stretches and the motorway in general.

After considering the above, methods for excluding VSL combinations that are expected to deteriorate the traffic on the neighboring stretches and the motorway in general are applied. In one method, the uncontrolled scenario is micro-simulated and the in-flow from the previous motorway stretch and the outflow to the following stretch are calculated. Then, a macroscopic model is applied on the examined stretch and VSL scenarios which cannot handle as much inflow from the previous stretch as the uncontrolled scenario are excluded. In addition, a macroscopic traffic analysis on the preceding motorway stretch is performed and the capacity of the stretch is estimated. Then, all VSL scenarios with outflows greater than the capacity of the preceding motorway stretch are rejected since they will cause congestion on the upstream.

The resulting solution space, after having applied the above constraint-based and macroscopic traffic analysis-based reduction schemes, is denoted residual solution space $S''$.

In a next step, generally denoted 105, an iterative solution filing process is executed, which starts with the selection of a candidate subset of VSL combinations, as indicated at 106. To this end, first, an acceptable solution space will be defined. The acceptable solution space can be defined either by the customer (i.e., a transport authority) or from an internal algorithm that estimates the potential throughput and fuel gains with VSL control given the present traffic conditions. The acceptable solution space includes all solutions within the residual solution space $S''$ that have a better performance than the uncontrolled scenario (i.e., targeting $X_1\%$ reduction in delay and $X_2\%$ fuel consumption reduction and $X_3\%$ pollutant emissions reduction with VSL control).

The problem can be defined as finding a VSL Control setting, $(S_1, S_2, ..., S_Y)$, such that:

$$Delay\,(S1, S2, ..., SY) \leq (1 \mp X1\%) \times Delay\,(Uncontrolled\ Sc.)$$

$$Fuel\_Consumption\,(S1, S2, ..., SY) \leq (1 - X2\%) \times Fuel\_Consumption\,(Uncontrolled\ Sc.)$$

$$Pollutant\_Emissions\,(S1, S2, ..., SY) \leq (1 - X3\%) \times Pollutant\_Emissions\,(Uncontrolled\ Sc.)$$

$$Subject\ to: (S1, S2, ..., SY) \in S''$$

In an effort to simplify the problem the objective function can be defined as:

$$Obj_{P(S1,S2,...,SY)} = Delay\,(S1, S2, ..., SY) + \alpha \times Fuel_{Co.}\,(S1, S2, ..., SY) + \beta \times Pollutant_{Em.}\,(S1, S2, ..., SY)$$

where $\alpha$, $\beta$, are weights. If the objective is to minimize one parameter (i.e., total delay) and reduce the fuel consumption by $X_2\%$ and pollutant emissions by $X_3\%$, then other methods such as Lagrangian relaxation can be applied to introduce the constraints into the objective function.

In this step, a subset $S_i''$ is selected from the residual solution space $S''$ for applying a first round of micro-simulations, as indicated at 107. The size of the subset depends on the target computation time, the estimated micro-simulation time and the size of the solution space.

Having defined the solution space size, $S$, and given the estimated micro-simulation time, $t_{sim}$, and the target computation time, $t_{tar}$, the size of the candidate subset is:

$$Size\,(S_i'') = \frac{t_{tar}}{t_{sim} \times \delta}$$

, where $\delta$ is the maximum number of candidate subsets that are allowed to be tested via micro-simulation. Parameter $\delta$ is user-defined and affects the termination of the solution search (i.e., solution search terminates either when a VSL combination belonging on an examined subset, $S_i''$, returns an acceptable solution or when an amount of $\delta$ candidate subsets are already tested via micro-simulation). It is evident that when the target computation time increases the sub-size can also be increased given that all other factors remain constant. Likewise, if the expected micro-simulation time is increased due to more traffic, the subset size should decrease.

The initial candidate subset is selected for performing the first round of micro-simulations and the micro-simulations feedback is used to select a second subset which is expected to have an improved performance. The feedback from micro-simulations is used to facilitate a fast convergence and reach an acceptable solution after examining only a limited number of subsets, $\gamma$, where, ideally, $\gamma \leq \delta$.

As also indicated at 107, in order to keep the number of computational expensive micro-simulations as low as possible, various macro-simulations and solution approximation methods may be applied. In particular, these methods may be used to approximate the objective function in order to compare and exclude VSL solutions that are evidently worse than the already computed ones without performing micro-simulation. For instance, if the cost (in terms of time) of a micro-simulated solution, $s_1$, is $f_1$, a method for approximating the cost of solution $s_2$ which takes the value $f'_2$ is to execute a reduced complexity micro-simulation by simulating only a small fraction of the input vehicles. The overall cost is then scaled in order to obtain a comparable value. If the expected number of vehicles for a specific OD (origin destination) pair is $q_1$ and a fraction $q_2$ is simulated, then the result is scaled by $q1/q2$ without considering the effect of congestion.

The approximate cost $f'_2$ can be computed also by using a simplified model. The model involves a low-complexity computation of the total delay of a VSL scenario under free flow conditions which is compared against the micro-computed delays of other micro-simulated VSL scenarios. If $\varphi$ is the VSL scenario, an estimate of the overall delay for VSL scenario

$\varphi$ under free flow conditions is given by:

$$D_{\varphi,\varepsilon} = (V_{c1}-S_{\varphi1})\frac{\Delta L_1}{V_{c1}} + (V_{c2}-S_{\varphi2})\frac{\Delta L_2}{V_{c2}} + \ldots + (V_{cY}-S_{\varphi Y})\frac{\Delta L_Y}{V_{cY}}$$

, where $V_{c1}$ is the desired speed under free flow conditions without VSL control, $\boldsymbol{S_{\varphi j}}$ is the VSL value for site $\boldsymbol{j}$ and $\Delta L_j$ is the distance between VSL site $j$ and $j+1$. If the overall delay estimate, $\boldsymbol{D_{\varphi,\varepsilon}}$, of VSL scenario $\varphi$ under free flow conditions is greater than the delay of other VSL scenarios $\boldsymbol{D_1, D_2,.., D_n}$ then the offspring is excluded from the next generation.

Alternatively or additionally to the above, an integrated macro-micro-simulation may be performed as follows: If the cost of a micro-simulated solution, $s_1$, is $f_1$, then a macroscopic traffic simulation is used to approximate the cost of solution $s_2$ which takes the value $f'_2$. A threshold $t_h$ is set and if the overall approximate cost of $s_2$ is such that $f'_2 > f_1 + t_0$ the solution $s_2$ is excluded.

In a preferred embodiment, genetic algorithms (GA) are used to find a solution after implementing a limited number of micro-simulations, thereby avoid testing all VSL combinations within subset $\boldsymbol{S''}$. The selection of the initial candidate sub-set is an important procedure since a solution might lie within the subset or at least a good direction for finding a better subset in a next iteration can be given.

### Initial Set of solutions

The initial subset is generated with defining a VSL combination via macro-optimization which returns a VSL combination that sets the same speed limit in all motorway lanes for each VSL site. In this method, a macroscopic traffic model is applied and the motorway stretch is treated as an isolated stretch for which the current traffic and the expected inflow/outflow are given. After applying a second or higher-order model the VSL values are set based on an optimization criterion (i.e., minimization of total travel time spent). The VSL values are the same for all lanes and differ only among VSL sites $(S_i, ..., S_1, ..., S_2, ..., S_2, ..., S_Y, ..., S_Y)$. After that, new VSL combinations generated based on the macroopt.-based VSL solution by applying slight changes such us speed reduction on the *merge* and the *collector* lanes. Examples of generated VSL settings are $(S_1, ..., S_1 - \varepsilon_1, ..., S_2, ..., S_2 - \varepsilon_2, ..., S_Y, ..., S_Y - \varepsilon_Y) \in S''$, where $(\varepsilon_1, \varepsilon_2, ..., \varepsilon_Y) \in \mathbb{Z}_{\geq 0}$, $(\varepsilon_1, \varepsilon_2, ..., \varepsilon_Y) \leq \varepsilon_{lim.}$ (*in km/h*) and could be generated via a probability distribution.

### Objective function computation

After defining the initial sub-set, the low computational cost methods for the approximation of the performance of VSL scenarios are applied and a number of VSL scenarios are excluded from the initial sub-set. For the remaining VSL scenarios, the value of the objective function which characterizes the performance of each VSL scenario is calculated via micro-simulation. An example of the performance of an initial population is:

TABLE 1: PERFORMANCE OF INITIAL POPULATION

| INITIAL POPULATION | TOTAL DELAY | FUEL CONSUMPTION | POLLUTANT EMIS. | OBJECTIVE FUN. |
|---|---|---|---|---|
| $S_{11}, S_{12}, ..., S_{1n}$ | $D_1$ | $FC_1$ | $PE_1$ | $D_1 + \alpha FC_1 + \beta PE_1$ |
| $S_{21}, S_{22}, ..., S_{2n}$ | $D_2$ | $FC_2$ | $PE_2$ | $D_2 + \alpha FC_2 + \beta PE_2$ |
| $S_{31}, S_{32}, ..., S_{3n}$ | $D_3$ | $FC_3$ | $PE_3$ | $D_3 + \alpha FC_3 + \beta PE_3$ |
| ............ | ... | ... | ... | |
| $S_{m1}, S_{m2}, ..., S_{mn}$ | $D_m$ | $FC_m$ | $PE_m$ | $D_m + \alpha FC_m + \beta PE_m$ |

On the basis of the computed objective function, a selection is made and only the best subjects *(elite individuals)* are allowed to continue with the cross-over phase. First, a threshold value is defined and all VSL combinations with objective functions that violate the threshold are excluded from the initial population. A threshold value can be the average of the objective function results and all VSL combinations with lower performance than the threshold values are not considered for the next stage. The selection of *parents* can also be based on a probability distribution, such as a probability distribution proportional to the inverse of the objective function cost.

**Crossover**

From the residual initial population, $S_i' \text{->} S_{i,res.}''$, the crossover phase of the first generation is started and new offsprings are generated, where all offsprings belong in solution space **S''**. Different crossover types can be applied such as three-parent crossover, two-point crossover, uniform and half uniform crossover and more. The generated offsprings are tested via the performance approximation methods and offsprings with low performance are rejected. The next generation includes the elite members of the previous generation and the offsprings which have passed the performance check with the low computational cost performance approximation methods.

**Mutation**

Mutation is then applied to the new generated off-springs. Mutation techniques might vary from permutation of speeds (i.e., {S1, S2, ...., Sn}->{S2, S1, ..., Sn}) to randomly change speed values..

The effect of mutation is controlled via a user-defined mutation probability which should be low thus preventing the searching procedure from becoming a fully random search. Apart from setting the mutation probability, mutation is controlled by rejecting generated individuals lying outside the solution space **S''**.

**Termination Condition**

Finally, the generation of new candidate sub-sets terminates when a VSL Control scenario is executed via micro-simulation and the results lying within the acceptable solution space or when the number of micro-simulations violate the target computation time (the number of new generations is greater than the threshold value, $\alpha$, and an acceptable solution is not found).

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. Method for motorway speed control, with the following method steps:

   splitting the motorway into a number of stretches, wherein each stretch includes one or more variable speed limit (VSL) sites that are configured to indicate VSL control settings in form of discrete speed values,
   defining an initial solution space of each stretch including all possible combinations of VSL control settings, and shrinking the initial solution space of each stretch by applying constraint-based and/or macroscopic traffic analysis-based reduction schemes, and
   based on the resulting residual solution space, evaluating a combination of VSL control settings as a solution combination for being indicated by said VSL sites of the respective stretch by performing an iterative solution search in which macro-simulations together with a limited number of micro-simulations are applied on selected candidate subsets of combinations of VSL control settings.

2. Method according to claim 1, wherein the stretches are generated in the form of non-overlapping adjoining motorway segments.

3. Method according to claim 1 or 2, wherein a motorway split into stretches is performed each time the VSL control settings of said VSL sites are intended to be updated.

4. Method according to any of claims 1 to 3, wherein a targeted computation time is determined based on the times at which VSL updates are to be performed.

5. Method according to any of claims 1 to 4, wherein the time required for executing micro-simulations of different stretches is estimated based on the current traffic conditions, and/or
   wherein the lengths of said stretches are dynamically adjusted taking into consideration at least one of the parameters current traffic in the motorway, targeted computation time, required micro-simulation time and desired level of accuracy.

6. Method according to any of claims 1 to 5, wherein said constraint-based reduction schemes are based on safety, practicability and/or feasibility checks, and/or
wherein said constraint-based reduction schemes include a scheme of checking VSL control settings based on their compatibility with previous VSL control settings.

7. Method according to any of claims 1 to 6, wherein said constraint-based reduction schemes include a scheme of checking the self-consistency of VSL control settings, and/or
wherein said constraint-based reduction schemes include a scheme of comparing the performance of VSL control settings against the performance of the uncontrolled scenario.

8. Method according to any of claims 1 to 7, wherein said macroscopic traffic analysis-based reduction schemes include a scheme in which, based on an analysis performed on historical data, a relationship is defined between the average speed and the traffic density, and in which combinations of VSL control settings are rejected that include higher speed values than the expected ones according to the current traffic conditions, and/or
wherein said macroscopic traffic analysis-based reduction schemes include a scheme that, by way of performing boundary condition analysis, eliminates combinations of VSL control settings which, when being applied in one stretch, would deteriorate the traffic conditions on other stretches.

9. Method according to any of claims 1 to 8, wherein an acceptable solution space is defined that includes all combinations of VSL control settings within said residual solution space having a better performance than the uncontrolled scenario.

10. Method according to any of claims 1 to 9, wherein an acceptable solution space is determined by solving an objective function that specifies the intended performance criteria,
wherein said performance criteria may take into consideration at least one of the parameters delay, fuel consumption and pollutant emission.

11. Method according to any of claims 1 to 10, wherein said iterative solution search includes the step of selecting from said residual solution space an initial candidate subset of combinations of VSL control settings, and applying a first round of micro-simulations on said initial candidate subset.

12. Method according to claim 11, wherein the size of said initial candidate subset is limited depending on the target computation time, the estimated time for executing a micro-simulation, and the size of said initial solution space, and/or
wherein said iterative solution search includes the step of selecting, based on the micro-simulation feedback, a subsequent candidate subset, and applying a next round of micro-simulations on said subsequent candidate subset.

13. Method according to claim 11 or 12, wherein, prior to applying said micro-simulations, solution approximation schemes are applied in each round of said iterative solution search in order to exclude combinations of VSL control settings that are evidently worse than combination of VSL control settings that have already been examined, and/or
wherein said iterative solution search is terminated either when a combination of VSL control settings belonging to an examined candidate subset returns a solution lying within said acceptable solution space or when a predefined maximum number of candidate subsets have been examined.

14. Method according to any of claims 11 to 13, wherein said candidate subset selection is performed by way of applying genetic algorithms, and/or
wherein crossover and/or mutation techniques are applied in connection with said candidate subset selection.

15. Computer program product which contains program code to execute a method in accordance with any of claims 1 to 14.

**Patentansprüche**

1. Verfahren zur Geschwindigkeitsregelung auf Autobahnen mit folgenden Verfahrensschritten:

Aufteilen der Autobahn in eine Anzahl von Abschnitten bzw. Strecken, wobei jeder Abschnitt eine oder mehrere Anlagen zur variablen Geschwindigkeitsbegrenzung, VSL, umfasst, die so konfiguriert sind, dass sie VSL-Steuereinstellungen in Form diskreter Geschwindigkeitswerte anzeigen,

Definieren eines anfänglichen Lösungsraums für jeden Abschnitt, der alle möglichen Kombinationen von VSL-Steuerungseinstellungen umfasst, und Verkleinern des anfänglichen Lösungsraums für jeden Abschnitt, indem constraintbasierte und/oder auf makroskopischer Verkehrsanalyse basierende Reduktionsschemata angewendet werden, und

basierend auf dem resultierenden Restlösungsraum, Auswerten einer Kombination von VSL-Steuerungseinstellungen als eine Lösungskombination, um durch die VSL-Anlagen des jeweiligen Abschnitts angezeigt zu werden, indem eine iterative Lösungssuche durchgeführt wird, in der Makrosimulationen zusammen mit einer begrenzten Anzahl von Mikrosimulationen auf ausgewählte Kandidaten-Teilmengen von Kombinationen von VSL-Steuereinstellungen angewendet werden.

2.  Verfahren nach Anspruch 1, wobei die Abschnitte in Form von sich nicht überlappenden, aneinandergrenzenden Autobahnabschnitten erzeugt werden.

3.  Verfahren nach Anspruch 1 oder 2, wobei eine Aufteilung der Autobahn in Abschnitte jedes Mal durchgeführt wird, wenn die VSL-Steuereinstellungen der VSL-Anlagen aktualisiert werden sollen.

4.  Verfahren nach einem der Ansprüche 1 bis 3, wobei eine Zielberechnungszeit basierend auf den Zeitpunkten bestimmt wird, zu denen VSL-Aktualisierungen durchzuführen sind.

5.  Verfahren nach einem der Ansprüche 1 bis 4, wobei die Zeit, die zum Ausführen von Mikrosimulationen verschiedener Abschnitte benötigt wird, basierend auf den aktuellen Verkehrsbedingungen geschätzt wird, und/oder wobei die Längen der Abschnitte dynamisch angepasst werden, wobei mindestens einer der Parameter aktueller Verkehr auf der Autobahn, Zielberechnungszeit, benötigte Mikrosimulationszeit und gewünschter Genauigkeitsgrad berücksichtigt werden.

6.  Verfahren nach einem der Ansprüche 1 bis 5, wobei die constraintbasierten Reduktionsschemata auf Sicherheits-, Praktikabilitäts- und/oder Durchführbarkeitsprüfungen basieren, und/oder wobei die constraintbasierten Reduktionsschemata ein Schema zum Prüfen von VSL-Steuereinstellungen basierend auf ihrer Kompatibilität mit vorherigen VSL-Steuereinstellungen umfassen.

7.  Verfahren nach einem der Ansprüche 1 bis 6, wobei die constraintbasierten Reduktionsschemata ein Schema zum Prüfen der Selbstkonsistenz von VSL-Steuereinstellungen umfassen, und/oder wobei die constraintbasierten Reduktionsschemata ein Schema zum Vergleichen der Leistungsfähigkeit von VSL-Steuereinstellungen mit der Leistungsfähigkeit des unkontrollierten Szenarios umfassen.

8.  Verfahren nach einem der Ansprüche 1 bis 7, wobei die auf makroskopischer Verkehrsanalyse basierenden Reduktionsschemata ein Schema umfassen, bei dem basierend auf einer an historischen Daten durchgeführten Analyse eine Beziehung zwischen der Durchschnittsgeschwindigkeit und der Verkehrsdichte definiert wird, und bei dem Kombinationen von VSL-Steuereinstellungen abgelehnt werden, die entsprechend den aktuellen Verkehrsbedingungen höhere Geschwindigkeitswerte als die erwarteten enthalten, und/oder wobei die auf makroskopischer Verkehrsanalyse basierenden Reduktionsschemata ein Schema umfassen, das durch Ausführen einer Grenzzustandsanalyse Kombinationen von VSL-Steuereinstellungen eliminiert, die, wenn sie in einem Abschnitt angewendet werden, die Verkehrsbedingungen auf anderen Abschnitten verschlechtern würden.

9.  Verfahren nach einem der Ansprüche 1 bis 8, wobei ein akzeptabler Lösungsraum definiert wird, der alle Kombinationen von VSL-Steuereinstellungen innerhalb des Restlösungsraums umfasst, die eine bessere Leistungsfähigkeit als das unkontrollierte Szenario haben.

10. Verfahren nach einem der Ansprüche 1 bis 9, wobei ein akzeptabler Lösungsraum durch Lösen einer Zielfunktion bestimmt wird, welche die vorgesehenen Leistungskriterien spezifiziert, wobei die Leistungskriterien mindestens einen der Parameter Verzögerung, Kraftstoffverbrauch und Schadstoffemission berücksichtigen können.

11. Verfahren nach einem der Ansprüche 1 bis 10, wobei die iterative Lösungssuche den Schritt des Auswählens einer anfänglichen Kandidaten-Teilmenge von Kombinationen von VSL-Steuereinstellungen aus dem Restlösungsraum und das Anwenden einer ersten Runde von Mikrosimulationen auf die anfängliche Kandidaten-Teilmenge umfasst.

12. Verfahren nach Anspruch 11, wobei die Größe der anfänglichen Kandidaten-Teilmenge abhängig von der Zielberechnungszeit, der geschätzten Zeit zum Ausführen einer Mikrosimulation und der Größe des anfänglichen Lösungsraums begrenzt ist, und/oder
wobei die iterative Lösungssuche den Schritt des Auswählens einer nachfolgenden Kandidaten-Teilmenge auf der Grundlage der Mikrosimulations-Rückmeldung und das Anwenden einer nächsten Runde von Mikrosimulationen auf die nachfolgende Kandidaten-Teilmenge umfasst.

13. Verfahren nach Anspruch 11 oder 12, wobei vor dem Anwenden der Mikrosimulationen Lösungsannäherungsschemata in jeder Runde der iterativen Lösungssuche angewendet werden, um Kombinationen von VSL-Steuereinstellungen auszuschließen, die offensichtlich schlechter sind als bereits überprüfte Kombinationen von VSL Steuereinstellungen, und/oder
wobei die iterative Lösungssuche beendet wird, entweder wenn eine Kombination von VSL-Steuereinstellungen, die zu einer untersuchten Kandidaten-Teilmenge gehört, eine Lösung zurückgibt, die in dem akzeptablen Lösungsraum liegt, oder wenn eine vordefinierte maximale Anzahl von Kandidaten-Teilmengen untersucht worden sind.

14. Verfahren nach einem der Ansprüche 11 bis 13, wobei die Auswahl der Kandidaten-Teilmenge durch Anwendung genetischer Algorithmen erfolgt, und/oder
wobei in Verbindung mit der Auswahl der Kandidaten-Teilmenge Crossover- und/oder Mutationstechniken angewendet werden.

15. Computerprogrammprodukt, das Programmcode zum Ausführen eines Verfahrens nach einem der Ansprüche 1 bis 14 enthält.

**Revendications**

1. Procédé de commande de vitesse sur autoroute, avec les étapes de procédé suivantes :

   la division de l'autoroute en un nombre de tronçons, dans lequel chaque tronçon inclut un ou plusieurs sites de limite de vitesse variable (VSL) qui sont configurés pour indiquer des réglages de commande de VSL sous forme de valeurs de vitesse discrètes,
   la définition d'un espace de solution initial de chaque tronçon incluant toutes les combinaisons possibles de réglages de commande de VSL, et le rétrécissement de l'espace de solution initial de chaque tronçon en appliquant des programmes de réduction à base de contrainte et/ou à base d'analyse de trafic macroscopique, et d'après l'espace de solution résiduel résultant, l'évaluation d'une combinaison de réglages de commande de VSL en tant que combinaison de solutions à indiquer par lesdits sites VSL du tronçon respectif en réalisant une recherche de solution itérative dans laquelle des macrosimulations conjointement à un nombre limité de microsimulations sont appliquées sur des sous-ensembles candidats sélectionnés de combinaisons de réglages de commande de VSL.

2. Procédé selon la revendication 1, dans lequel les tronçons sont générés sous forme de segments d'autoroute contigus non chevauchants.

3. Procédé selon la revendication 1 ou 2, dans lequel une division d'autoroute en tronçons est réalisée à chaque fois que les réglages de commande de VSL desdits sites VSL sont destinés à être mis à jour.

4. Procédé selon l'une quelconque des revendications 1 à 3, dans lequel un temps de calcul ciblé est déterminé d'après les temps auxquels des mises à jour de VSL doivent être réalisées.

5. Procédé selon l'une quelconque des revendications 1 à 4, dans lequel le temps requis pour exécuter des microsimulations de tronçons différents est estimé d'après les conditions de trafic actuel, et/ou
dans lequel les longueurs desdits tronçons sont ajustées dynamiquement en prenant en compte au moins l'un des paramètres de trafic actuel dans l'autoroute, de temps de calcul ciblé, de temps de microsimulation requis et de niveau de précision souhaité.

**6.** Procédé selon l'une quelconque des revendications 1 à 5, dans lequel lesdits programmes de réduction à base de contrainte sont basés sur des vérifications de sécurité, de viabilité et/ou de faisabilité, et/ou dans lequel lesdits programmes de réduction à base de contrainte incluent un programme de vérification de réglages de commande de VSL d'après leur compatibilité avec des réglages de commande de VSL précédents.

**7.** Procédé selon l'une quelconque des revendications 1 à 6, dans lequel lesdits programmes de réduction à base de contrainte incluent un programme de vérification de l'autocohérence de réglages de commande de VSL, et/ou dans lequel lesdits programmes de réduction à base de contrainte incluent un programme de comparaison de la performance de réglages de commande de VSL vis-à-vis de la performance du scénario non commandé.

**8.** Procédé selon l'une quelconque des revendications 1 à 7, dans lequel lesdits programmes de réduction à base d'analyse de trafic macroscopique incluent un programme dans lequel, d'après une analyse réalisée sur des données historiques, une relation est définie entre la vitesse moyenne et la densité de trafic, et dans lequel des combinaisons de réglages de commande de VSL sont rejetées qui incluent des valeurs de vitesse plus élevées que celles attendues selon les conditions de trafic actuel, et/ou dans lequel lesdits programmes de réduction à base d'analyse de trafic macroscopique incluent un programme qui, grâce à la réalisation d'une analyse des conditions aux limites, élimine des combinaisons de réglages de commande de VSL qui, si elles étaient appliquées dans un tronçon, détérioreraient les conditions de trafic sur d'autres tronçons.

**9.** Procédé selon l'une quelconque des revendications 1 à 8, dans lequel un espace de solution acceptable est défini qui inclut toutes les combinaisons de réglages de commande de VSL au sein dudit espace de solution résiduel ayant une meilleure performance que le scénario non commandé.

**10.** Procédé selon l'une quelconque des revendications 1 à 9, dans lequel un espace de solution acceptable est déterminé en résolvant une fonction objective qui spécifie les critères de performance prévus, dans lequel lesdits critères de performance peuvent prendre en compte au moins l'un des paramètres de retard, de consommation de carburant et d'émission de polluant.

**11.** Procédé selon l'une quelconque des revendications 1 à 10, dans lequel ladite recherche de solution itérative inclut l'étape de sélection à partir dudit espace de solution résiduel d'un sous-ensemble candidat initial de combinaisons de réglages de commande de VSL, et l'application d'une première série de microsimulations sur ledit sous-ensemble candidat initial.

**12.** Procédé selon la revendication 11, dans lequel la taille dudit sous-ensemble candidat initial est limitée selon le temps de calcul cible, le temps estimé pour exécuter une microsimulation, et la taille dudit espace de solution initial, et/ou dans lequel ladite recherche de solution itérative inclut l'étape de sélection, d'après le retour de microsimulation, d'un sous-ensemble candidat ultérieur, et l'application d'une série suivante de microsimulations sur ledit sous-ensemble candidat ultérieur.

**13.** Procédé selon la revendication 11 ou 12, dans lequel, avant l'application desdites microsimulations, des programmes d'approximation de solution sont appliqués dans chaque série de ladite recherche de solution itérative afin d'exclure des combinaisons de réglages de commande de VSL qui sont manifestement pires qu'une combinaison de réglages de commande de VSL qui ont déjà été examinés, et/ou dans lequel ladite recherche de solution itérative est terminée soit lorsqu'une combinaison de réglages de commande de VSL appartenant à un sous-ensemble candidat examiné retourne à une solution se trouvant au sein dudit espace de solution acceptable soit lorsqu'un nombre maximal prédéfini de sous-ensembles candidats ont été examinés.

**14.** Procédé selon l'une quelconque des revendications 11 à 13, dans lequel ladite sélection de sous-ensembles candidats est réalisée grâce à l'application d'algorithmes génétiques, et/ou dans lequel des techniques de plan croisé et/ou de mutation sont appliquées en lien avec ladite sélection de sous-ensembles candidats.

**15.** Produit-programme d'ordinateur qui contient un code de programme pour exécuter un procédé selon l'une quelconque des revendications 1 à 14.

INPUT DATA (FLOWS, CURRENT TRAFFIC, MOTORWAY
TOPOLOGY, TARGET COMPUTATION TIME)

100

MICRO-
SIMULATION
TIME
ESTIMATION

101

VSL SOLUTION SPACE        S

102

CONSTRAINTS-BASED
REDUCTION        S'

103

MACRO-ANALYSIS
REDUCTION        S"

104

Pre-Processing

Rule Set        $S_i$"

CANDIDATE SUB-SET
SELECTION        106

105

INTEGRATED
MACRO/MICRO-
SIMULATION        107

Iterative Processing

SOLUTION

Fig. 1

Fig. 2

VMS site

On-Ramp

Off-Ramp

Motorway Splits

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HEGYI, A. ; DE SCHUTTER, B. ; HELLENDOORN, H.** Model predictive control for optimal coordination of ramp metering and variable speed limits. *Transportation Research,* 2005, vol. 13 (3), 185-209
- **KOTSIALOS, A. ; PAPAGEORGIOU, M.** Coordinated and integrated control of motorway networks via non-linear optimal control. *Transportation Research,* 2002, vol. 10 (1), 65-84
- **FREJO, J.R.D. ; CAMACHO, E.F.** Feasible cooperation based model predictive control for freeway traffic systems. *2011 50th IEEE CDC-ECC*

- **PANIS, I.L. ; BROEKX, S. ; LIU, R.** Modelling instantaneous traffic emissions and the influence of traffic speed limits. *Science of the total Environment,* 2006, vol. 371 (1-3), 270-285
- **GIPPS, P.G.** A behavioural car-following model for computer simulation. *Transport Research,* 1981, vol. 15 (2), 105-111
- **FRITZSCHE, H.** A model for traffic simulation. *In Traffic Eng. Control,* 1994, vol. 35 (5), 317-321
- **ELLIOT, M.A. ; ARMITAGE, C.J.** Effects of implementation intentions on the self-reported frequency of drivers' compliance with speed limits. *Journal of Experimental Psycology,* 2006, vol. 12 (2), 108-117